(19) Europäisches Patentamt
European Patent Office
Office européen des brevets

(11) **EP 2 351 188 B1**

(12) **FASCICULE DE BREVET EUROPEEN**

(45) Date de publication et mention de la délivrance du brevet:
**17.02.2016 Bulletin 2016/07**

(21) Numéro de dépôt: **09795503.3**

(22) Date de dépôt: **23.11.2009**

(51) Int Cl.:
*H02J 9/06* (2006.01)     *H02J 7/00* (2006.01)
*H02J 9/00* (2006.01)     *H01M 10/44* (2006.01)

(86) Numéro de dépôt international:
**PCT/FR2009/052268**

(87) Numéro de publication internationale:
**WO 2010/061116 (03.06.2010 Gazette 2010/22)**

(54) **DISPOSITIF D'ALIMENTATION DE SECOURS EN COURANT CONTINU D'UN SYSTÈME DE TRAITEMENT D'INFORMATION A AU MOINS UN CALCULATEUR**

UNUNTERBRECHBARE GLEICHSTROM-STROMVERSORGUNGSEINRICHTUNG FÜR EIN DATENVERARBEITUNGSSYSTEM MIT MINDESTENS EINEM PROZESSOR

DIRECT CURRENT UNINTERRUPTIBLE POWER SUPPLY DEVICE FOR A DATA-PROCESSING SYSTEM WITH AT LEAST ONE PROCESSOR

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **25.11.2008 FR 0806601**

(43) Date de publication de la demande:
**03.08.2011 Bulletin 2011/31**

(73) Titulaire: **Bull S.A.S.**
**78340 Les Clayes-sous-Bois (FR)**

(72) Inventeur: **LECOURTIER, Georges**
**F-78000 Vesailles (FR)**

(74) Mandataire: **Bonnet, Michel et al**
**Cabinet Bonnet**
**93, rue Réaumur - Boîte 10**
**75002 Paris (FR)**

(56) Documents cités:
**EP-A- 1 306 958          EP-A1- 2 093 859**
**US-A- 5 675 233          US-A1- 2006 186 739**
**US-A1- 2007 262 651      US-B1- 6 225 708**

• **SUKUMARA G V ET AL: "Fuel cell based uninterrupted power sources" POWER ELECTRONICS AND DRIVE SYSTEMS, 1997. PROCEEDINGS., 1997 INTERNAT IONAL CONFERENCE ON SINGAPORE 26-29 MAY 1997, NEW YORK, NY, USA,IEEE, US, vol. 2, 26 mai 1997 (1997-05-26), pages 728-733, XP010244589 ISBN: 978-0-7803-3773-2**

**EP 2 351 188 B1**

**Description**

La présente invention concerne un dispositif d'alimentation de secours en courant continu d'un système électrique de traitement d'information comportant au moins un calculateur alimenté en très basse tension. Elle concerne également une installation comprenant un tel dispositif.

Plus précisément, elle s'applique à un système de traitement d'information dont l'alimentation en courant continu est destinée à être raccordée à un réseau d'alimentation en courant alternatif par l'intermédiaire d'un convertisseur AC/DC de courant alternatif en courant continu à très basse tension.

On entend par « très basse tension », une tension généralement qualifiée de « tension de sécurité » qui permet à un opérateur de manipuler sans danger tout composant électrique sous cette tension. Une telle tension est en outre généralement adaptée aux composants électroniques d'un système de traitement d'information. Plusieurs domaines sont définis légalement en France et en Europe (TBT, TBTS, TBTP, TBTF) mais placent tous les très basses tensions sous le seuil de 120 V en courant continu et sous le seuil de 50 V en courant alternatif.

La tension d'un courant alternatif distribué par un réseau de distribution d'électricité est en général de l'ordre de 220/230 V ce qui représente donc a priori un danger pour un opérateur. En revanche, il est généralement considéré qu'une tension de 50 V ou moins ne représente pas de danger à la manipulation. Ainsi, dans les applications de télécommunication, les systèmes de traitement des données de transmission sont généralement soumis à une tension d'environ 48 V. En aviation, les composants embarqués sont généralement soumis à une tension continue d'environ 24 V. Enfin, un système de traitement d'information de type calculateur est généralement soumis à une tension continue d'environ 12 V.

Un système de traitement d'information est par exemple un ensemble de serveurs informatiques interconnectés en réseau local, formant ainsi un calculateur à haute performance, généralement qualifié de calculateur HPC (de l'Anglais « High Performance Computing »). Dans ce cas comme dans d'autres applications sensibles (serveur informatique, micro-ordinateur fixe ou portable, station radiofréquence de télécommunication, etc.), il est important que le fonctionnement du système électrique ne soit pas perturbé par des micro-coupures du réseau d'alimentation en courant alternatif. En effet, de telles micro-coupures, même lorsqu'elles ne durent que quelques centaines de millisecondes, peuvent engendrer des erreurs de calcul, des pertes de données ou des dysfonctionnements très pénalisants du calculateur HPC.

Pourtant, de telles micro-coupures sont assez fréquentes, le gestionnaire du réseau d'alimentation en courant alternatif pouvant avoir besoin ponctuellement de délester des parties du réseau. Elles ont en général une durée équivalente à quelques périodes du courant alternatif : pour un courant alternatif de 50 Hertz, une micro-coupure de dix à douze périodes dure ainsi entre 200 et 250 millisecondes. En outre, le redémarrage du convertisseur AC/DC suite à une micro-coupure peut prendre lui aussi 100 à 200 millisecondes, ce qui donne une micro-coupure, vue du système électrique, pouvant durer jusqu'à 450 millisecondes.

Les installations comportant un système électrique de traitement d'information, de type sensible aux micro-coupures du réseau, prévoient généralement un dispositif d'alimentation sans interruption qui permet de fournir une alimentation électrique stable et dépourvue de micro-coupures, quoi qu'il se produise sur le réseau d'alimentation en courant alternatif. Cette alimentation sans interruption est généralement reliée directement au réseau d'alimentation et comporte de ce fait un redresseur pour une conversion du courant alternatif en courant continu. Elle est en outre munie d'un dispositif de stockage d'énergie, tel qu'une batterie d'accumulateurs ou un ensemble de supercondensateurs, et d'un onduleur pour convertir le courant continu généré par le dispositif de stockage d'énergie en un courant alternatif. Intercalée entre le réseau d'alimentation en courant alternatif et le convertisseur AC/DC de l'installation, elle vient donc se substituer au réseau d'alimentation pour fournir de l'énergie électrique au système électrique lors des micro-coupures. Un tel dispositif d'alimentation sans interruption est par exemple décrit dans l'article de Sukumara et al, intitulé « Fuel cell based uninterrupted power sources », publié dans 1997 International Conference on Power Electronics and Drive Systems Proceedings, vol. 2, pages 728-733, 26-29 mai 1997.

Comme divulgué dans la demande de brevet Européen publiée sous le numéro EP 1 639 684, le dispositif de stockage d'énergie peut être constitué de supercondensateurs disposés en série pour une plus grande rapidité de la charge en énergie électrique. Cette charge est réalisée par un chargeur alimenté soit en courant continu, lorsque l'alimentation est indépendante du réseau d'alimentation ou lorsque le courant alternatif du réseau d'alimentation a été préalablement converti en courant continu, soit en courant alternatif, auquel cas le chargeur doit comporter son propre convertisseur AC/DC.

Plus précisément, dans la demande de brevet Européen publiée sous le numéro EP 1 661 226, un chargeur de module de stockage à base de supercondensateurs est décrit. Ce chargeur est alimenté par une source d'énergie telle qu'une pile à combustible, une batterie, ou une autre source d'énergie, pouvant notamment être une source de courant alternatif combinée à un convertisseur AC/DC.

Dans tous les cas, un dispositif d'alimentation sans interruption tel que ceux précités présente un certain encombrement. Si en outre un fort courant doit être fourni en situation de décharge, il est parfois nécessaire de prévoir la disposition de plusieurs de ces dispositifs d'alimentation sans interruption en parallèle.

Il peut donc être souhaité de prévoir un dispositif d'alimentation de secours en courant continu qui permette de s'affranchir d'au moins une partie des problèmes et contraintes précités.

On note le document US 2006/186739 A1 du 24 août 2006 qui décrit un dispositif d'alimentation de secours en courant continu d'un système électrique de traitement d'information comportant au moins un calculateur alimenté en très basse tension selon le préambule de la revendication indépendante 1.

L'invention a donc pour objet un dispositif d'alimentation de secours en courant continu d'un système de traitement d'information à au moins un calculateur alimenté en très basse tension dont l'alimentation en courant continu est destinée à être raccordée à un réseau d'alimentation en courant alternatif par l'intermédiaire d'un convertisseur AC/DC de courant alternatif en courant continu, comportant des moyens de stockage d'énergie électrique, caractérisé en ce qu'il comporte en outre :

- des moyens de charge des moyens de stockage d'énergie électrique à partir d'une partie du courant continu fourni par le convertisseur AC/DC à l'alimentation en très basse tension du système de traitement d'information, et
- des moyens de décharge de l'énergie stockée dans les moyens de stockage d'énergie électrique vers l'alimentation en très basse tension du système de traitement d'information, à une très basse tension prédéterminée sensiblement constante, suite à la détection d'une micro-coupure de courant du réseau d'alimentation.

L'invention est définie par les caractéristiques de la revendication indépendante 1. Les modes de réalisations préférés sont définis par les revendications dépendantes.

En effet, en étant conçu pour se charger directement à l'aide du courant fourni par le convertisseur AC/DC du système électrique et se décharger directement vers l'alimentation en courant continu du système électrique, un dispositif d'alimentation de secours selon l'invention présente un encombrement réduit par une meilleure intégration avec le système électrique de traitement d'information qu'il est destiné à alimenter en cas de micro-coupure.

De façon optionnelle, les moyens de stockage comportent au moins un supercondensateur à double couche électrochimique.

De façon optionnelle également, les moyens de stockage comportent au moins un circuit de supercondensateurs disposés en série.

De façon optionnelle également, chaque circuit de supercondensateurs comporte des moyens de compensation d'une dispersion de charge des supercondensateurs disposés en série.

De façon optionnelle également, les moyens de compensation d'une dispersion de charge comportent des circuits de déviation d'un courant de charge des supercondensateurs disposés en série, chaque circuit de déviation étant monté entre les bornes de l'un des supercondensateurs disposés en série et comportant des moyens de régulation du courant qui le traverse en fonction d'une différence entre une différence de potentiel mesurée aux bornes de ce supercondensateur et une différence de potentiel de référence.

De façon optionnelle également, les moyens de régulation comportent un transistor MOS à effet de champ dont la tension de grille est fonction de ladite différence entre la différence de potentiel mesurée aux bornes de ce supercondensateur et la différence de potentiel de référence.

De façon optionnelle également, les moyens de décharge comportent un contrôleur apte à détecter une baisse de tension du courant continu fourni par le convertisseur AC/DC et un commutateur commandé par ce contrôleur.

De façon optionnelle également, le commutateur comporte plusieurs interrupteurs disposés en parallèle commandés par le contrôleur, chaque interrupteur étant notamment conçu sur la base d'une paire de transistors N-MOS à effet de champ disposés tête-bêche.

De façon optionnelle également, le contrôleur comporte une logique de commande conçue pour commander des fermetures et ouvertures successives du commutateur pendant un cycle de décharge des moyens de stockage, en fonction d'une tension seuil minimale de décharge et d'une tension seuil maximale de décharge prédéterminées.

Enfin, l'invention a également pour objet une installation électrique destinée à être raccordée à un réseau d'alimentation en courant alternatif, comportant un convertisseur AC/DC de courant alternatif en courant continu, un système de traitement d'information à au moins un calculateur alimenté en très basse tension raccordé à ce convertisseur AC/DC via un premier circuit d'alimentation, un second circuit de dérivation d'une partie du courant continu fourni par le convertisseur AC/DC disposé parallèlement au premier circuit, et un dispositif d'alimentation de secours tel que défini précédemment disposé dans ce second circuit de dérivation.

L'invention sera mieux comprise à l'aide de la description qui va suivre, donnée uniquement à titre d'exemple et faite en se référant aux dessins annexés dans lesquels :

- la figure 1 représente schématiquement la structure générale d'une installation électrique selon un mode de réalisation de l'invention,
- la figure 2 représente schématiquement une répartition possible, sur une carte formant support, de différents éléments d'un dispositif d'alimentation de secours selon l'invention,

- la figure 3 représente schématiquement la structure générale de moyens de stockage d'énergie du dispositif d'alimentation de secours de la figure 2,
- la figure 4 représente schématiquement la logique de fonctionnement d'un contrôleur de décharge du dispositif d'alimentation de secours de la figure 2,
- la figure 5 illustre, par un diagramme temporel, un exemple de fonctionnement du contrôleur de décharge dont la logique de fonctionnement est détaillée sur la figure 4,
- les figures 6 et 7 illustrent, par des diagrammes temporels, un exemple de fonctionnement de l'installation de la figure 1 pendant une micro-coupure de courant de son réseau d'alimentation en courant alternatif.

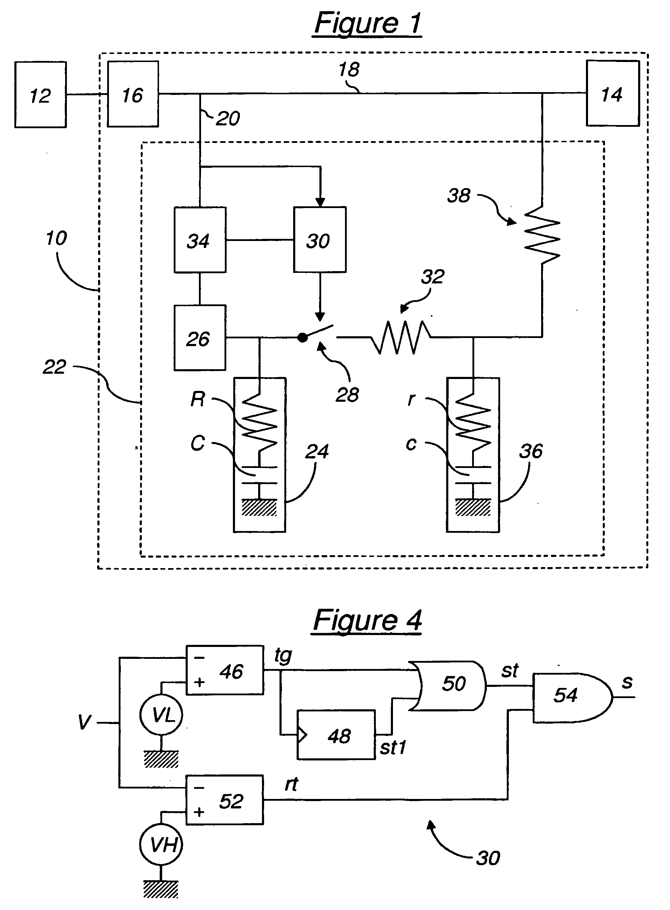

L'installation électrique 10 représentée sur la figure 1 est raccordée à un réseau 12 d'alimentation en courant alternatif, tel que par exemple un réseau délivrant un courant à 50 Hz sous une tension de 230 V.

L'installation électrique 10 comporte un système électrique 14 de traitement d'information destiné à être alimenté en courant continu, à une intensité imposée par le système électrique 14 et à une tension prédéterminée sensiblement constante. A titre purement illustratif, le système électrique 14 est un ensemble de serveurs informatiques formant un calculateur HPC. Il est par exemple conçu pour être alimenté en courant continu de 700 A sous une tension sensiblement constante de 12 V.

Par « sensiblement constante », on entend une tension continue dont les variations sont suffisamment faibles autour de sa valeur de référence (en l'occurrence 12 V dans l'application considérée) pour que le système électrique 14 puisse les supporter sans dommage pour ses composants de traitement d'information. Etant donné que les systèmes de traitement d'information, par exemple de type calculateurs, sont munis d'un étage de conversion interne qui régule le courant qu'ils consomment en fonction de la tension d'entrée pour fournir une tension très régulière pouvant descendre jusqu'à 1 V, des variations de 10 à 15 % autour de la valeur de référence de la tension continue dite sensiblement constante fournie en entrée de ces systèmes sont acceptables. Ainsi par exemple, il est acceptable de considérer qu'une tension continue sensiblement constante de 12 V puisse varier entre 11 et 13 V. Une telle tension sensiblement constante est par exemple obtenue par une régulation de la tension continue fournie au système électrique 14 à l'aide d'une tension seuil maximale et d'une tension seuil minimale de référence.

Pour assurer cette alimentation, l'installation électrique 10 comporte donc un convertisseur AC/DC 16 transformant le courant alternatif à 50 Hz sous une tension de 230 V en un courant continu délivré sous une tension de 12 V. Le système électrique 14, plus particulièrement son alimentation en courant continu, est relié au convertisseur AC/DC 16 à l'aide d'un premier circuit d'alimentation 18.

Un second circuit de dérivation 20 d'une partie du courant continu fourni par le convertisseur AC/DC 16 est disposé parallèlement au premier circuit 18 entre le convertisseur AC/DC 16 et le système électrique 14. Ce second circuit 20 comporte un dispositif 22 d'alimentation de secours en courant continu. Il permet donc, au dispositif d'alimentation de secours 22, de puiser une partie du courant continu délivré pour le système électrique 14 par le convertisseur AC/DC 16 afin de stocker de l'énergie électrique, et de fournir, en cas de micro-coupure du réseau d'alimentation 12, du courant continu, puisé à partir de l'énergie électrique stockée, au système électrique 14. En d'autres termes, le dispositif d'alimentation de secours 22 est conçu pour prendre le relais du réseau d'alimentation 12 en cas de micro-coupure.

Le dispositif d'alimentation de secours 22 comporte des moyens 24 de stockage d'énergie électrique. Ces moyens de stockage 24 peuvent comporter une ou plusieurs batteries classiques. Les batteries d'accumulateurs présentent généralement un bon rapport d'énergie stockée par unité de volume. En revanche, elles présentent un mauvais rapport de puissance crête émise par unité de volume ce qui les rend peu avantageuses pour des applications où le système électrique 14 est consommateur d'un courant continu de forte intensité. C'est le cas notamment lorsque le système électrique 14 est un calculateur HPC puisqu'un courant continu de 700 A peut être nécessaire. Dans ce cas, les moyens 24 de stockage d'énergie électrique comportent avantageusement au moins un supercondensateur, de préférence au moins un circuit de supercondensateurs disposés en série, dont le rapport de puissance crête émise par unité de volume est nettement supérieur. Cette puissance crête ne peut cependant pas être émise pendant une durée trop longue, mais c'est largement suffisant pour pallier les micro-coupures d'un réseau d'alimentation en courant alternatif de bonne qualité, celles-ci ne dépassant généralement pas quelques centaines de millisecondes.

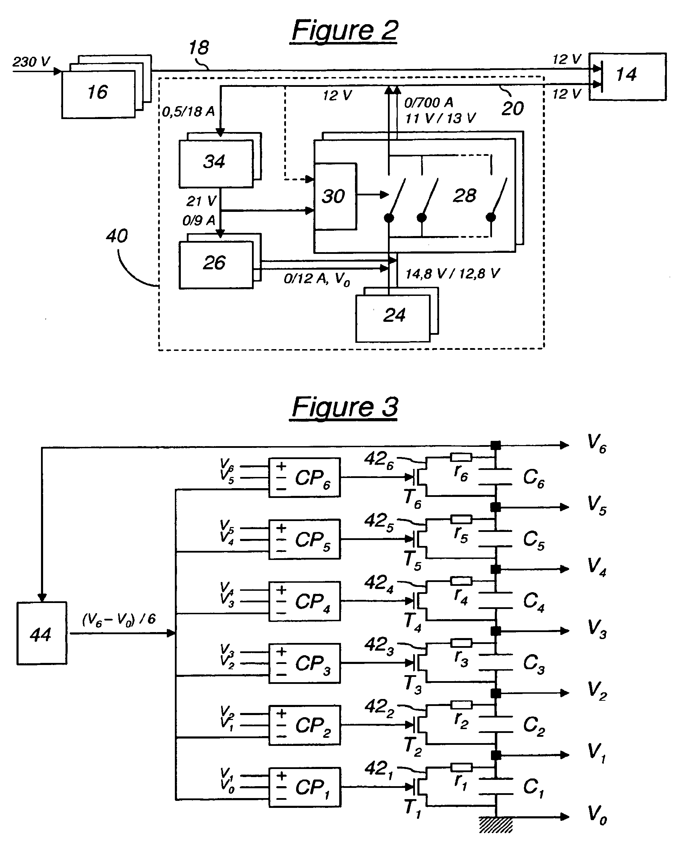

Les moyens 24 de stockage d'énergie électrique à supercondensateurs seront détaillés en référence à la figure 3. Les supercondensateurs sont généralement de type EDLC (de l'Anglais « Electrochemical Double Layer Capacitor »), c'est-à-dire conçus selon le procédé de double couche électrochimique. Ils présentent une résistance interne nettement inférieure à celle des batteries. Les moyens 24 de stockage d'énergie électrique à supercondensateurs peuvent être modélisés par un circuit de type RC parallèle (i.e. circuit comportant une résistance et un condensateur en parallèle), relié d'une part à la masse et d'autre part au second circuit 20, de résistance R et de capacité C.

Le dispositif d'alimentation de secours 22 comporte en outre des moyens 26 de charge des moyens 24 de stockage d'énergie électrique à partir d'une partie du courant continu fourni par le convertisseur AC/DC 16 à l'alimentation du système électrique 14. Ces moyens de charge 26 sont constitués d'un chargeur de supercondensateurs classique et ne seront donc pas détaillés. Ils permettent de charger les moyens 24 de stockage d'énergie électrique en quelques minutes, en général pas plus de trois minutes, perturbant ainsi assez peu le fonctionnement du système électrique 14.

Le dispositif d'alimentation de secours 22 comporte aussi des moyens 28, 30 de décharge de l'énergie stockée dans les moyens 24 de stockage d'énergie électrique vers l'alimentation du système électrique 14, à une intensité donnée (imposée par le système électrique 14) et une tension prédéterminée sensiblement constante, suite à la détection d'une micro-coupure de courant du réseau d'alimentation 12.

Ces moyens de décharge comportent un commutateur 28 commandé par un contrôleur 30. Le commutateur 28 comprend par exemple au moins une paire de transistors N-MOS à effet de champ disposés tête-bêche en série. Cette disposition par paire permet d'isoler les supercondensateurs des moyens 24 de stockage d'énergie électrique du système électrique 14, quelle que soit la tension aux bornes des supercondensateurs et du système électrique 14. Par ailleurs, si au moment de la décharge le courant destiné à traverser le commutateur 28 est supérieur à ce que peut supporter une telle paire de transistors, plusieurs paires de transistors disposées en parallèle, commandées par le même contrôleur 30, peuvent être prévues pour former le commutateur 28.

Le commutateur 28 est illustré sur la figure 1 par un interrupteur idéal auquel est associée une résistance interne 32. Le fonctionnement du contrôleur 30 sera détaillé en référence aux figures 4 à 7. Il est notamment conçu pour pouvoir détecter une micro-coupure du réseau d'alimentation 12 dès que la valeur de la tension fournie au système électrique devient inférieure à une tension seuil prédéterminée.

Comme indiqué précédemment, le courant continu de 700 A fourni par le convertisseur AC/DC 16 à l'alimentation du système électrique 14 présente par exemple une tension de 12 V sur le premier circuit 18. Le courant prélevé par le second circuit 20 présente donc a priori cette même tension de 12 V. Cependant, pour qu'en cas de micro-coupure les moyens 24 de stockage d'énergie électrique puissent fournir un courant continu au système électrique 14 à cette même tension de 12 Volts, il est nécessaire que ceux-ci soient chargés à une tension supérieure, à cause notamment de la résistance interne des moyens 24 de stockage d'énergie électrique et de celle du commutateur 28. Par exemple, cette tension supérieure nécessaire peut être voisine de 15 Volts. En outre, du fait que le commutateur 28 est composé de transistors MOS à effet de champ dont il faut alimenter la grille, le contrôleur 30 doit fournir en général une tension supérieure à 20 Volts.

Pour ces raisons, un rehausseur de tension 34 de type classique est fourni en amont du chargeur 26 et du contrôleur 30 dans le second circuit 20, pour rehausser la tension de 12 V à 21 V par exemple. Selon une autre variante, deux rehausseurs de tension différents pourraient être envisagés, l'un pour le chargeur 26, l'autre pour le contrôleur 30, puisque les tensions dont ils ont besoin ne sont pas les mêmes.

Le dispositif d'alimentation de secours 22 fonctionne de la façon suivante :

- lorsque le système électrique 14 est alimenté en courant continu par le convertisseur AC/DC 16, une partie de ce courant est détournée par le second circuit 20 pour charger les moyens 24 de stockage d'énergie électrique, tant que ceux-ci ne sont pas encore complètement chargés,
- lorsqu'une micro-coupure est détectée par le contrôleur 30, celui-ci commande la fermeture du commutateur 28 pour que les moyens 24 de stockage d'énergie électrique prennent le relais du réseau d'alimentation 12 défaillant.

Le temps mis par le commutateur 28 pour se fermer et laisser passer le courant provenant des moyens 24 de stockage d'énergie électrique peut cependant être suffisant pour perturber le fonctionnement du système électrique 14. Le dispositif d'alimentation de secours 22 comporte donc avantageusement des moyens supplémentaires 36 de stockage d'énergie électrique, par exemple constitués de condensateurs simples, dits condensateurs de lissage, disposés en parallèle en sortie du commutateur 28. Les moyens supplémentaires 36 de stockage d'énergie électrique peuvent, comme les moyens de stockage 24 à supercondensateurs, être modélisés par un circuit de type RC parallèle, relié d'une part à la masse et d'autre part au second circuit 20 en sortie du commutateur 28, de résistance r et de capacité c. A titre d'exemple non limitatif, une vingtaine de condensateurs de lissage peuvent être disposés en sortie du commutateur 28, pour une résistance r de 0,5 mΩ et une capacité c de 0,01 F.

Grâce à ces moyens supplémentaires 36 de stockage d'énergie électrique, le dispositif d'alimentation de secours 22 fonctionne plus précisément de la façon suivante :

- lorsque le système électrique 14 est alimenté en courant continu par le convertisseur AC/DC 16, une partie de ce courant est détournée pendant une durée limitée par le second circuit 20 pour charger les moyens 24 de stockage d'énergie électrique, tant que ceux-ci ne sont pas encore complètement chargés,
- une petite partie de ce courant est également détournée pendant une durée limitée pour charger les moyens supplémentaires 36 de stockage d'énergie électrique tant que ceux-ci ne sont pas encore complètement chargés,
- lorsqu'une micro-coupure est détectée par le contrôleur 30, celui-ci commande la fermeture du commutateur 28,
- entre le début de la micro-coupure et la fermeture effective du commutateur 28, une partie de l'énergie électrique accumulée dans les moyens supplémentaires 36 de stockage d'énergie est transmise au système électrique 14, et

- lorsque le commutateur 28 est effectivement fermé, les moyens 24 de stockage d'énergie électrique prennent le relais du réseau d'alimentation 12 défaillant.

On comprendra qu'il n'est pas utile de prévoir des supercondensateurs dans les moyens supplémentaires 36 de stockage d'énergie électrique puisqu'ils ne sont destinés à fournir leur énergie stockée que pendant un très court temps de transition de l'ordre de quelques microsecondes, nettement inférieur à la durée de la micro-coupure.

Concrètement, le dispositif d'alimentation de secours 22, avec son chargeur 26, son contrôleur 30, son rehausseur de tension 34, son commutateur 28, et ses moyens de stockage 24 et 36, est monté sur une carte formant support et présentant une résistance interne 38 égale par exemple à 0,1 mΩ. Cette carte, portant la référence 40, comporte les éléments précités selon une répartition schématique illustrée sur la figure 2.

Alors que le système électrique 14 est alimenté par le convertisseur AC/DC 16 en courant continu de 12 V à partir d'un courant alternatif à 230 V via le premier circuit 18, le second circuit 20 est lui aussi raccordé au premier circuit 18 de sorte qu'il permet une charge du dispositif 22 d'alimentation de secours à l'aide de ce courant continu de 12 V. Cette charge se fait par une consommation de courant continu comprise généralement entre 0,5 et 18 A. Le second circuit 20 permet aussi au contrôleur 30 de prélever la valeur de la tension du courant continu fourni par le convertisseur AC/DC 16 de manière à pouvoir détecter une éventuelle défaillance, par l'apparition d'une micro-coupure, du réseau d'alimentation 12.

Le rehausseur de tension 34, par exemple un convertisseur DC/DC à découpage, rehausse la tension du courant continu fourni par le second circuit 20 en un courant continu à 21 V d'intensité comprise entre 0 et 9 A selon que le dispositif 22 d'alimentation de secours est en situation de charge ou non. Ce courant alimente le contrôleur 30 et le chargeur 26.

Le chargeur 26 fournit à son tour aux moyens 24 de stockage d'énergie électrique un courant continu dont l'intensité varie entre 0 et 12 A selon que le dispositif 22 d'alimentation de secours est en situation de charge ou non.

Il convient de dimensionner les moyens 24 de stockage d'énergie électrique de sorte qu'en situation de décharge, ils puissent fournir un courant de 700 A pendant par exemple au plus 480 ms sous une tension d'environ 12 V toujours au moins supérieure à une limite prédéterminée par exemple fixée à 11 V.

De façon concrète, les moyens 24 de stockage d'énergie électrique comportent au moins un circuit de six supercondensateurs disposés en série. Pour des dimensions acceptables, il est possible de trouver des supercondensateurs dont les caractéristiques sont les suivantes : une capacité égale à 600 F, une résistance interne égale à 0,83 mΩ et une différence de potentiel maximale supportée aux bornes du supercondensateur de 2,7 V. Ainsi, un circuit de six supercondensateurs disposés en série présente une capacité équivalente C = 100 F et une résistance interne équivalente R = 4,98 mΩ. On montre que l'évolution de la tension du courant délivré par un tel circuit pendant la décharge de ses supercondensateurs vérifie l'équation suivante :

$$V = ( V_0 - IT / C ) - RI, \qquad\qquad (1)$$

où $V_0$ est la tension de charge que doit délivrer le chargeur 26, I = 700 A le courant délivré par le circuit, T = 480 ms le temps maximal de décharge.

On voit que, sous ces conditions, pour que la tension V du courant délivré par le circuit soit toujours supérieure à 11 V, il faut que la tension de charge $V_0$ soit au moins de 17,85 V. Or la différence de potentiel maximale supportée aux bornes des six condensateurs précités est de 6x2,7 V = 16,2 V. Il apparaît donc qu'un seul circuit de six condensateurs ne suffit pas.

En prévoyant deux circuits de six condensateurs tels que ceux précités, disposés en parallèle, on conçoit des moyens 24 de stockage d'énergie électrique dont la capacité équivalente C vaut 200 F et la résistance interne équivalente R vaut 2,49 mΩ. Sous ces nouvelles conditions, pour que la tension V du courant délivré par les moyens 24 de stockage d'énergie électrique soit toujours supérieure à 11 V, il faut que la tension de charge $V_0$ soit au moins de 14,42 V. En pratique, la chute de tension aux bornes du commutateur 28 impose une tension de charge légèrement supérieure, par exemple égale à $V_0$ = 14,8 V. En tenant compte en outre de la résistance interne des moyens 24 de stockage d'énergie électrique, il est ainsi possible pour le second circuit 20 de délivrer un courant de 700 A sous une tension sensiblement constante, c'est-à-dire toujours comprise entre 11 et 13 V, en situation de décharge du dispositif 22 d'alimentation de secours, pendant une durée maximale de micro-coupure, incluant le redémarrage du convertisseur AC/DC 16, de 480 ms. On notera aussi que des moyens 24 de stockage d'énergie électrique présentant ces paramètres de résistance et capacité équivalentes à l'aide de supercondensateurs peuvent être chargés en moins de trois minutes par le chargeur 26.

La figure 2 illustre la duplication du circuit de six supercondensateurs dans les moyens 24 de stockage d'énergie électrique. Il est également possible, pour des raisons pratiques, de dupliquer le rehausseur de tension 34, le chargeur 26, le contrôleur 30 et le commutateur 28.

Enfin, comme indiqué précédemment et comme illustrée sur la figure 2 également, le commutateur 28 peut-être formé de plusieurs paires de transistors MOS disposées en parallèle, de sorte que chacune de ses paires de transistors MOS ne supporte qu'une fraction de l'intensité du courant I = 700 A fourni en situation de décharge des moyens 24 de stockage d'énergie électrique. Par exemple, le commutateur 28 comporte six paires de transistors.

L'un quelconque des circuits de supercondensateurs des moyens 24 de stockage d'énergie électrique est par exemple d'une structure conforme à celle illustrée sur la figure 3.

Selon cette structure, six supercondensateurs $C_1$, $C_2$, $C_3$, $C_4$, $C_4$, $C_5$ et $C_6$ sont disposés en série entre la masse et le second circuit 20 en sortie du chargeur 26. Au cours d'une charge de ce circuit de six supercondensateurs, la tension ($V_6$ - $V_0$) à ses bornes augmente jusqu'à la valeur maximale de 14,8 V. Idéalement, si les six supercondensateurs sont strictement identiques, la charge est répartie de façon homogène dans chacun d'entre eux, ne dépassant ainsi pas localement les 2,7 V supportés par chaque supercondensateur. Malheureusement, en réalité une dispersion des paramètres des supercondensateurs est inévitable par fabrication de sorte que des variations de l'ordre de 20 % peuvent être atteintes d'un supercondensateur à l'autre, notamment sur leur capacité. Ainsi, si rien n'est prévu pour compenser cette dispersion, les six supercondensateurs ne se chargent pas à la même vitesse et les différences de potentiel respectives à leurs bornes ($V_6$ - $V_5$), ($V_5$ - $V_4$), ($V_4$ - $V_3$), ($V_3$ - $V_2$), ($V_2$ - $V_1$), ($V_1$ - $V_0$) augmentent à des vitesses différentes pendant un cycle de charge : certaines peuvent ainsi dépasser la valeur maximale supportable de 2,7 V par les supercondensateurs correspondants alors que la charge n'est théoriquement pas complètement terminée.

Il est donc avantageux de prévoir des moyens de compensation d'une dispersion de charge des supercondensateurs. Ces moyens de compensation prévoient la présence d'un circuit de déviation du courant de charge du circuit de six supercondensateurs aux bornes de chaque supercondensateur. Chaque circuit de déviation comporte des moyens de régulation du courant qui le traverse en fonction d'une différence entre une différence de potentiel mesurée aux bornes du supercondensateur correspondant et une différence de potentiel de référence.

Ainsi, un premier circuit de déviation $42_1$ est prévu aux bornes du premier supercondensateur $C_1$. Il est caractérisé par une résistance $r_1$ et comporte un transistor MOS à effet de champ $T_1$ dont la tension de grille permet de régler la portion du courant de charge qui est déviée dans le circuit de déviation $42_1$ pour accélérer ou freiner la charge du supercondensateur $C_1$. En effet, plus la tension de grille du transistor $T_1$ est importante, plus le courant de charge passe facilement dans le premier circuit de déviation $42_1$ et moins le supercondensateur $C_1$ se charge rapidement. Ainsi, la tension de grille du transistor $T_1$ est avantageusement fournie par un comparateur $CP_1$ fournissant à chaque instant la valeur de la différence entre la différence de potentiel réelle ($V_1$ - $V_0$) entre les bornes du premier supercondensateur $C_1$ et la différence de potentiel ($V_6$ - $V_0$)/6 idéale que l'on devrait mesurer aux bornes du premier supercondensateur $C_1$ si tous les supercondensateurs se chargeaient à la même vitesse. Ce comparateur $CP_1$ peut être réalisé à l'aide d'un amplificateur opérationnel monté en soustracteur dont l'entrée positive est à la tension $V_1$ (prélevée à la borne de potentiel supérieur du premier supercondensateur) et dont l'entrée négative est connectée aux tensions $V_0$ (prélevée à la borne de potentiel inférieur du premier supercondensateur) et ($V_6$ - $V_0$)/6. Ce montage en soustracteur est classique et ne sera donc pas détaillé.

De même, des circuits de déviation $42_2$, $42_3$ $42_4$, $42_5$ et $42_6$ similaires au circuit $42_1$, dont les déviations sont réglées par des comparateurs $CP_2$, $CP_3$ $CP_4$, $CP_5$ et $CP_6$ similaires au comparateur $CP_1$, sont prévus aux bornes des supercondensateurs $C_2$, $C_3$ $C_4$, $C_5$ et $C_6$.

Pour tous les comparateurs $CP_1$, $CP_2$, $CP_3$ $CP_4$, $CP_5$ et $CP_6$, la tension ($V_6$ - $V_0$)/6 est fournie par un diviseur de tension 44 prélevant la tension aux bornes du circuit de six supercondensateurs et la divisant par six.

Les moyens de compensation précédemment décrits permettent donc d'assurer une charge homogène des six condensateurs de chaque circuit des moyens 24 de stockage d'énergie électrique jusqu'à la tension de 14,8 V.

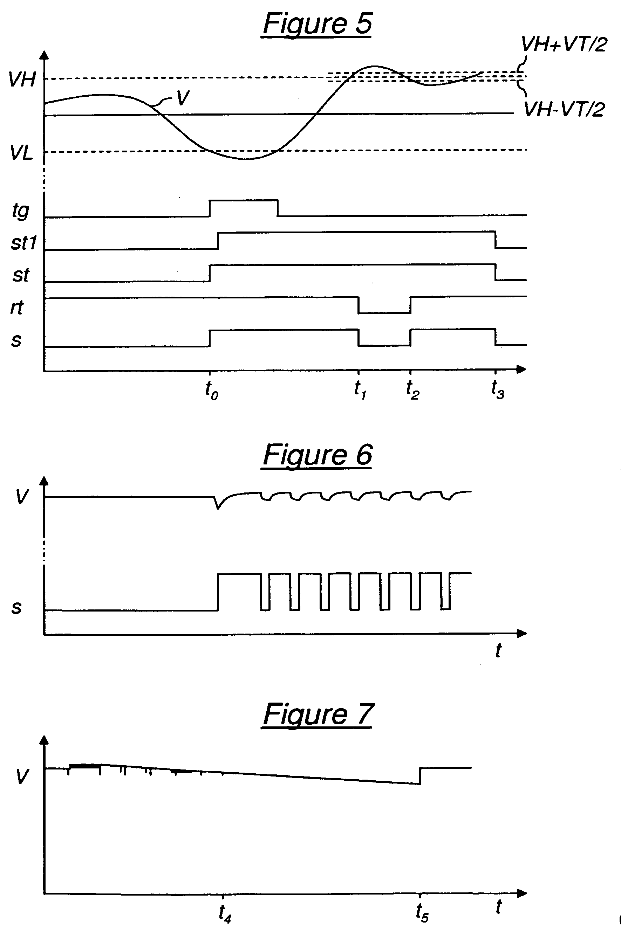

La logique de fonctionnement du contrôleur 30 va maintenant être détaillée en référence aux figures 4 et 5.

Ce contrôleur 30 a pour première fonction de détecter toute chute de tension dans le premier circuit 18 due à une micro-coupure et pour seconde fonction de réguler la quantité d'énergie fournie par les moyens 24 de stockage d'énergie électrique en situation de décharge du dispositif 22 d'alimentation de secours dans le système électrique 14.

Il comporte alors un premier comparateur 46 qui compare la tension V prélevée du courant continu fourni au système électrique 14 à une tension minimale de référence VL comprise entre 11 et 12 V. Le signal tg fourni en sortie de ce comparateur 46, par exemple à « 1 » si la tension V passe en dessous de la tension minimale de référence VL et à « 0 » sinon, est fourni en entrée d'un temporisateur 48. Ce temporisateur 48 fournit un signal st1 maintenu à « 1 » pendant une durée prédéterminée, par exemple 25 ms. Les signaux tg et st1 sont alors transmis à un module logique « OU » 50 fournissant en sortie le signal st = tg OU st1. Ce montage logique permet au contrôleur 30 d'activer, à l'aide du commutateur 28, une décharge des moyens 24 de stockage d'énergie électrique du dispositif 22 d'alimentation de secours dès que la tension V passe en dessous de la tension minimale de référence VL et de maintenir cette décharge pendant une durée minimale prédéterminée par le temporisateur 48, de manière à éviter des commutations intempestives du commutateur 28.

Le contrôleur 30 doit en outre être conçu pour que la tension fournie par le dispositif 22 d'alimentation de secours ne dépasse pas une tension maximale supportable par le système électrique 14 de par exemple 13 V.

Il comporte alors un second comparateur 52, qui compare la tension continue V fournie au système électrique 14 à une tension maximale de référence VH comprise entre 12 et 13 V, et fournit en sortie un signal rt qui inhibe momentanément la décharge des moyens 24 de stockage d'énergie électrique lorsque cette tension maximale de référence VH est dépassée par V. Le signal rt fourni en sortie de ce comparateur 52 est par exemple à « 1 » si la tension V reste en dessous de la tension maximale de référence VH et à « 0 » sinon. Pour éviter, également dans cette situation, des commutations intempestives du commutateur 28 autour de la tension VH, le second comparateur 52 est de préférence un comparateur à hystérésis de type « Trigger de Schmitt » dont la tension d'hystérésis est par exemple fixée à une valeur VT faible devant VH. Dans une variante de réalisation, le premier comparateur 46 pourrait aussi être un comparateur à hystérésis de type « Trigger de Schmitt ».

L'inhibition de la décharge des moyens 24 de stockage d'énergie électrique par le signal rt est réalisée à l'aide d'un module logique « ET » 54 alimenté par les signaux st et rt et fournissant en sortie le signal s = st ET rt. C'est ce signal s qui permet la commande d'ouverture (s à « 0 ») ou de fermeture (s à « 1 », situation de décharge du dispositif 22 d'alimentation de secours) du commutateur 28. Plus concrètement, le signal s contrôle les paires de transistors qui constituent le commutateur 28.

Par exemple, comme cela est visible sur la figure 5, lorsqu'à un premier instant $t_0$, alors que le signal s est nul et le commutateur 28 ouvert, la tension V passe en dessous de la valeur VL, le signal tg et le signal st1 passent à la valeur « 1 ». Le signal rt étant initialement à la valeur « 1 », le signal s passe alors à la valeur « 1 » commandant la fermeture du commutateur 28. De cette façon, la tension V peut augmenter par décharge des moyens 24 de stockage d'énergie électrique.

Même si le signal tg repasse à la valeur « 0 » au bout de quelques millisecondes, le signal st1 reste à la valeur « 1 » jusqu'à un instant $t_3$ tel que ($t_3$ - $t_0$) = 25 ms, la durée prédéterminée du temporisateur 48. Dans l'exemple particulier illustré sur cette figure, le signal st fourni en sortie du module logique OU 50 est identique au signal st1.

Ensuite, lorsqu'à un instant $t_1$ la tension V, qui augmente toujours par décharge des moyens 24 de stockage d'énergie électrique, passe au-dessus de la valeur VH+VT/2, le signal rt initialement à la valeur « 1 » passe à la valeur « 0 ». Le signal s passe alors à la valeur « 0 » commandant l'ouverture du commutateur 28. La tension V recommence alors à baisser jusqu'à atteindre la valeur VH-VT/2 à un instant $t_2$. Les signaux rt et s repassent alors à la valeur « 1 » commandant de nouveau la fermeture du commutateur 28.

A plus grande échelle temporelle, on voit sur la figure 6 que cette logique de commande du contrôleur 30 permet de maintenir, par fermetures et ouvertures successives du commutateur 28 pendant toute la durée de décharge du dispositif 22 d'alimentation de secours, une tension fournie au système électrique 14 sensiblement constante, c'est-à-dire entre 11 et 13 V, et ne dépassant notamment pas la valeur maximale de 13 V, à l'aide des tensions de référence VL et VH.

A plus grande échelle temporelle encore, on voit sur la figure 7 que la tension fournie par le dispositif 22 d'alimentation de secours tend à diminuer comme prévu par l'équation (1). Les fermetures et ouvertures successives du commutateur 28 tendent alors à s'espacer jusqu'à un instant $t_4$ où le commutateur 28 reste fermé tant que la micro-coupure perdure. Enfin, à un instant $t_5$, lorsque la micro-coupure est terminée et que le réseau d'alimentation 12 peut de nouveau alimenter le convertisseur AC/DC 16 en courant alternatif, le contrôleur 30 commande l'ouverture du commutateur 28 et les moyens 24 de stockage d'énergie électrique peuvent de nouveau retrouver une tension de charge maximale égale à 14,8 V.

On notera que dans l'exemple détaillé et illustré ci-dessus, la durée totale de la microcoupure, n'excédant généralement pas 480 ms, comporte en fait la durée de la micro-coupure en tant que telle ajoutée à la durée de la remise en marche de l'alimentation du système électrique 14 en courant continu par le convertisseur AC/DC 16.

Avec les choix technologiques et les paramètres donnés précédemment à titre purement illustratif, on notera qu'il est ainsi possible de concevoir un dispositif d'alimentation de secours très compact, tenant dans un boîtier d'environ 48 cm de longueur par 22 cm de largeur (surface essentiellement due aux dimensions de la carte 40) par 4 cm de hauteur (essentiellement due à la taille des douze supercondensateurs des moyens 24 de stockage d'énergie électrique).

Il apparaît clairement qu'un dispositif d'alimentation de secours tel que décrit selon le mode de réalisation proposé est compact et apte à être mieux intégré dans tout système électrique devant être protégé contre des micro-coupures que les dispositifs d'alimentation sans interruption connus. Il peut avantageusement être substitué à eux dans des zones géographiques où les réseaux d'alimentation en courant alternatif sont de bonne qualité (micro-coupures de quelques centaines de millisecondes) mais peut aussi être ajouté dans une installation comportant déjà un dispositif d'alimentation de l'état de la technique, du fait de sa compacité et de son faible coût de revient.

Par l'utilisation de supercondensateurs, il présente en outre une très forte réactivité, tant en charge qu'en décharge, pouvant même être combiné à des systèmes électriques exigeant une forte puissance de crête. Un autre avantage des supercondensateurs par rapport aux batteries d'accumulateurs est leur durée de vie nettement supérieure pouvant atteindre quinze ans.

**Revendications**

1. Dispositif (22) d'alimentation de secours en courant continu d'un système (14) de traitement d'information à au moins un calculateur alimenté en très basse tension dont l'alimentation en courant continu est destinée à être raccordée à un réseau (12) d'alimentation en courant alternatif par l'intermédiaire d'un convertisseur AC/DC (16) de courant alternatif en courant continu, comportant :

   - des moyens (24) de stockage d'énergie électrique,
   - des moyens (26) de charge des moyens (24) de stockage d'énergie électrique à partir d'une partie du courant continu fourni par le convertisseur AC/DC (16) à l'alimentation en très basse tension du système de traitement d'information (14), et
   - des moyens (28, 30) de décharge de l'énergie stockée dans les moyens (24) de stockage d'énergie électrique vers l'alimentation en très basse tension du système de traitement d'information (14), à une très basse tension prédéterminée sensiblement constante, suite à la détection d'une micro-coupure de courant du réseau d'alimentation (12),
   **caractérisé en ce que** les moyens de décharge (28, 30) comportent un contrôleur (30) apte à détecter une baisse de tension du courant continu fourni par le convertisseur AC/DC (16) et un commutateur (28) commandé par ce contrôleur (30), le contrôleur (30) comportant une logique de commande (46, 48, 50, 52, 54) conçue pour commander des fermetures et ouvertures successives du commutateur (28) pendant un cycle de décharge des moyens de stockage (24), en fonction d'une tension seuil minimale de décharge et d'une tension seuil maximale de décharge prédéterminées.

2. Dispositif (22) d'alimentation de secours selon la revendication 1, dans lequel les moyens de stockage (24) comportent au moins un supercondensateur ($C_1$, $C_2$, $C_3$ $C_4$, $C_5$, $C_6$) à double couche électrochimique.

3. Dispositif (22) d'alimentation de secours selon la revendication 2, dans lequel les moyens de stockage (24) comportent au moins un circuit de supercondensateurs ($C_1$, $C_2$, $C_3$ $C_4$, $C_5$, $C_6$) disposés en série.

4. Dispositif (22) d'alimentation de secours selon la revendication 3, dans lequel chaque circuit de supercondensateurs comporte des moyens (44, $CP_1$, $CP_2$, $CP_3$ $CP_4$, $CP_5$, $CP_6$, $42_1$, $42_2$, $42_3$ $42_4$, $42_5$, $42_6$) de compensation d'une dispersion de charge des supercondensateurs ($C_1$, $C_2$, $C_3$ $C_4$, $C_5$, $C_6$) disposés en série.

5. Dispositif (22) d'alimentation de secours selon la revendication 4, dans lequel les moyens de compensation d'une dispersion de charge (44, $CP_1$, $CP_2$, $CP_3$ $CP_4$, $CP_5$, $CP_6$, $42_1$, $42_2$, $42_3$ $42_4$, $42_5$, $42_6$) comportent des circuits ($42_1$, $42_2$, $42_3$ $42_4$, $42_5$, $42_6$) de déviation d'un courant de charge des supercondensateurs disposés en série ($C_1$, $C_2$, $C_3$ $C_4$, $C_5$, $C_6$), chaque circuit de déviation étant monté entre les bornes de l'un des supercondensateurs disposés en série et comportant des moyens ($T_1$, $T_2$, $T_3$ $T_4$, $T_5$, $T_6$) de régulation du courant qui le traverse en fonction d'une différence entre une différence de potentiel mesurée aux bornes de ce supercondensateur et une différence de potentiel de référence.

6. Dispositif (22) d'alimentation de secours selon la revendication 5, dans lequel les moyens de régulation comportent un transistor MOS à effet de champ ($T_1$, $T_2$, $T_3$ $T_4$, $T_5$, $T_6$) dont la tension de grille est fonction de ladite différence entre la différence de potentiel mesurée aux bornes de ce supercondensateur et la différence de potentiel de référence.

7. Dispositif (22) d'alimentation de secours selon l'une quelconque des revendications 1 à 6, dans lequel le commutateur (28) comporte plusieurs interrupteurs disposés en parallèle commandés par le contrôleur (30), chaque interrupteur étant notamment conçu sur la base d'une paire de transistors N-MOS à effet de champ disposés tête-bêche.

8. Installation électrique (10) destinée à être raccordée à un réseau (12) d'alimentation en courant alternatif, comportant un convertisseur AC/DC (16) de courant alternatif en courant continu, un système (14) de traitement d'information à au moins un calculateur alimenté en très basse tension raccordé à ce convertisseur AC/DC (16) via un premier circuit d'alimentation (18), un second circuit (20) de dérivation d'une partie du courant continu fourni par le convertisseur AC/DC (16) disposé parallèlement au premier circuit (18), et un dispositif (22) d'alimentation de secours selon l'une quelconque des revendications 1 à 7 disposé dans ce second circuit de dérivation (20).

**Patentansprüche**

1. Vorrichtung (22) zur Notversorgung mit Gleichstrom eines Informationsverarbeitungssystems (14) mit mindestens einem Rechner, der mit Niederspannung versorgt wird und dessen Gleichstromversorgung über einen AC/DC-Wandler (16) zum Umwandeln von Wechselstrom in Gleichstrom an ein Wechselstromversorgungsnetz (12) angeschlossen werden soll, wobei die Vorrichtung Folgendes aufweist:

   - Mittel (24) zum Speichern von elektrischer Energie,
   - Mittel (26) zum Laden der Mittel (24) zum Speichern von elektrischer Energie ausgehend von einem Teil des Gleichstroms, der von dem AC/DC-Wandler (16) an die Niederspannungsversorgung des Informationsverarbeitungssystem (14) abgegeben wird, und
   - Mittel (28, 30) zum Entladen der in den Mitteln (24) zum Speichern von elektrischer Energie gespeicherten Energie zur Niederspannungsversorgung des Informationsverarbeitungssystems (14) bei einer im Wesentlichen konstanten vorbestimmten Niederspannung nach der Erfassung einer Mikrostromunterbrechung des Versorgungsnetzes (12),
   **dadurch gekennzeichnet, dass** die Entladungsmittel (28, 30) eine Steuereinheit (30), die einen Spannungsabfall des von dem AC/DC-Wandler (16) bereitgestellten Gleichstroms erfassen kann, und einen von dieser Steuereinheit (30) gesteuerten Schalter (28) aufweisen, wobei die Steuereinheit (30) eine Steuerlogik (46, 48, 50, 52, 54) aufweist, die dazu ausgelegt ist, aufeinanderfolgende Schließ- und Öffnungsvorgänge des Schalters (28) während eines Zyklus zum Entladen der Speichermittel (24) in Abhängigkeit von einer vorbestimmten minimalen Entladungsschwellenspannung und einer vorbestimmten maximalen Entladungsschwellenspannung zu steuern.

2. Vorrichtung (22) zur Notversorgung nach Anspruch 1, bei der die Speichermittel (24) mindestens einen Superkondensator ($C_1$, $C_2$, $C_3$, $C_4$, $C_5$, $C_6$) mit elektrochemischer Doppelschicht umfassen.

3. Vorrichtung (22) zur Notversorgung nach Anspruch 2, bei der die Speichermittel (24) mindestens eine Schaltung aus in Reihe geschalteten Superkondensatoren ($C_1$, $C_2$, $C_3$, $C_4$, $C_5$, $C_6$) aufweist.

4. Vorrichtung (22) zur Notversorgung nach Anspruch 3, bei der jede Superkondensatorschaltung Mittel (44, $CP_1$, $CP_2$, $CP_3$, $CP_4$, $CP_5$, $CP_6$, $42_1$, $42_2$, $42_3$, $42_4$, $42_5$, $42_6$) zur Kompensation einer Ladungsstreuung der in Reihe geschalteten Superkondensatoren ($C_1$, $C_2$, $C_3$, $C_4$, $C_5$, $C_6$) aufweist.

5. Vorrichtung (22) zur Notversorgung nach Anspruch 4, bei der die Mittel (44, $CP_1$, $CP_2$, $CP_3$, $CP_4$, $CP_5$, $CP_6$, $42_1$, $42_2$, $42_3$, $42_4$, $42_5$, $42_6$) zur Kompensation einer Ladungsstreuung Schaltungen ($42_1$, $42_2$, $42_3$, $42_4$, $42_5$, $42_6$) zur Umlenkung eines Ladestroms der in Reihe geschalteten Superkondensatoren ($C_1$, $C_2$, $C_3$, $C_4$, $C_5$, $C_6$) umfasst, wobei jede Umlenkschaltung zwischen den Anschlüssen eines der in Reihe geschalteten Superkondensatoren angeordnet ist und Mittel ($T_1$, $T_2$, $T_3$, $T_4$, $T_5$, $T_6$) zur Regulierung des durch diesen fließenden Stroms in Abhängigkeit von einer Differenz zwischen einer an den Anschlüssen dieses Superkondensators gemessenen Potentialdifferenz und einer Bezugspotentialdifferenz aufweist.

6. Vorrichtung (22) zur Notversorgung nach Anspruch 5, bei der die Regulierungsmittel einen MOS-Feldeffekttransistor ($T_1$, $T_2$, $T_3$, $T_4$, $T_6$) umfassen, dessen Gitterspannung von der Differenz zwischen der an den Anschlüssen dieses Superkondensators gemessenen Potentialdifferenz und der Bezugspotentialdifferenz abhängig ist.

7. Vorrichtung (22) zur Notversorgung nach einem der Ansprüche 1 bis 6, bei der der Schalter (28) mehrere parallel zueinander angeordnete Ausschalter umfasst, die von der Steuereinheit (30) gesteuert werden, wobei jeder Ausschalter insbesondere auf der Grundlage von zwei NMOS-Feldeffekttransistoren mit antiparalleler Anordnung aufgebaut ist.

8. Elektrische Einrichtung (10), die dazu vorgesehen ist, an ein Wechselstromversorgungsnetz (12) angeschlossen zu werden, mit einem AC/DC-Wandler (16) zur Umwandlung von Wechselstrom in Gleichstrom, einem Informationsverarbeitungssystem (14) mit mindestens einem Rechner, der mit Niederspannung versorgt wird und über eine erste Versorgungsschaltung (18) an diesen AC/DC-Wandler (16) angeschlossen ist, einer zur ersten Schaltung (18) parallel angeordneten zweiten Schaltung (20) zur Umlenkung eines Teils des Gleichstroms, der von dem AC/DC-Wander (16) bereitgestellt wird, und einer Vorrichtung (22) zur Notversorgung nach einem der Ansprüche 1 bis 7, die in dieser zweiten Umlenkungsschaltung (20) angeordnet ist.

**Claims**

1. Direct current backup power supply device (22) of a system (14) for data processing with at least one computer supplied with very low voltage the direct current power supply of which is intended to be connected to an alternating current power supply system (12) by means of an AC/DC converter (16) of alternating current into direct current, comprising:

   - means (24) for storing electrical energy,
   - means (26) for charging the means (24) for storing electrical energy from a part of the direct current supplied by the AC/DC converter (16) to the very low voltage power supply of the data processing system(14), and
   - means (28,30) for discharging the energy stored in the means (24) for storing electrical energy to the very low voltage power supply of the data processing system (14), at a noticeably constant predetermined very low voltage, following the detection of a micro-cut of the current power supply system (12),
   **characterized in that** the discharge means (28, 30) comprises a controller (30) capable of detecting a voltage drop of the direct current provided by the AC/DC converter (16) and a switch (28) controlled by this controller (30), the controller (30) comprising a control logic (46, 48, 50, 52, 54) designed to control successive closing and opening operations of the switch (28) during a discharge cycle of the storage means (24), according to a predetermined minimum discharge threshold voltage and a maximum discharge threshold voltage.

2. Backup power supply device (22) according to claim 1, wherein the storage means (24) comprises at least one electrochemical double layer super-capacitor ($C_1$, $C_2$, $C_3$ $C_4$, $C_5$, $C_6$).

3. Backup power supply device (22) according to claim 2, wherein the storage means (24) comprises at least one circuit of super-capacitors ($C_1$, $C_2$, $C_3$ $C_4$, $C_5$, $C_6$) arranged in series.

4. Backup power supply device (22) according to claim 3, wherein each circuit of super-capacitors comprises means (44, $CP_1$, $CP_2$, $CP_3$ $CP_4$, $CP_5$, $CP_6$, $42_1$, $42_2$, $42_3$, $42_4$, $42_5$, $42_6$) for compensating a charge dispersion of the super-capacitors ($C_1$, $C_2$, $C_3$ $C_4$, $C_5$, $C_6$) arranged in series.

5. Backup power supply device (22) according to claim 4, wherein the charge dispersion compensation means (44, $CP_1$, $CP_2$, $CP_3$ $CP_4$, $CP_5$, $CP_6$, $42_1$, $42_2$, $42_3$, $42_4$, $42_5$, $42_6$) comprise circuits ($42_1$, $42_2$, $42_3$, $42_4$, $42_5$, $42_6$) for derivation of a charging current of the super-capacitors arranged in series ($C_1$, $C_2$, $C_3$ $C_4$, $C_5$, $C_6$), each derivation circuit being mounted between the terminals of one of the super-capacitors arranged in series and comprising means ($T_1$, $T_2$, $T_3$ $T_4$, $T_5$, $T_6$) for regulating the current flowing through it according to a difference between a potential difference measured at the terminals of this super-capacitor and a reference potential difference.

6. Backup power supply device (22) according to claim 5, wherein the regulation means comprises a MOS field-effect transistor ($T_1$, $T_2$, $T_3$ $T_4$, $T_5$, $T_6$) the grid voltage of which is a function of said difference between the potential difference measured at the terminals of this super-capacitor and the reference potential difference.

7. Backup power supply device (22) according to any one of claims 1 to 6, wherein the switch (28) comprises several switches arranged in parallel controlled by the controller (30), each switch being particularly designed on the basis of a pair of N-MOS field-effect transistors arranged head-to-tail.

8. Electrical system (10) intended to be connected to an alternating current power supply system (12), comprising an AC/DC converter (16) of alternating current into direct current, a system (14) for data processing to at least one computer supplied with very low voltage connected to this AC/DC converter (16) via a first power supply system (18), a second circuit (20) for derivation of part of the direct current provided by the AC/DC converter (216) arranged parallel to the first circuit (18), and a backup power supply device (22) according to any one of claims 1 to 7 arranged in this second derivation circuit (20).

## Figure 1

## Figure 4

## Figure 2

## Figure 3

## Figure 5

## Figure 6

## Figure 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1639684 A
- EP 1661226 A
- US 2006186739 A1

**Littérature non-brevet citée dans la description**

- **SUKUMARA et al.** Fuel cell based uninterrupted power sources. *1997 International Conference on Power Electronics and Drive Systems Proceedings,* 26 Mai 1997, vol. 2, 728-733